Europäisches Patentamt

European Patent Office

Office européen des brevets

(19)

(11) Publication number: **0 157 113**
A2

(12) **EUROPEAN PATENT APPLICATION**

(21) Application number: **85101135.3**

(22) Date of filing: **04.02.85**

(51) Int. Cl.⁴: **H 04 L 25/24**

(30) Priority: **10.02.84 IT 1956284**

(43) Date of publication of application: **09.10.85**
Bulletin **85/41**

(84) Designated Contracting States: **AT BE CH DE FR GB IT LI LU NL SE**

(71) Applicant: **I.T.C. S.p.A., Viale Montegrappa, I-27100 Pavia (IT)**

(72) Inventor: **Filibian, Arek, Via Maestri 3, I-27100 Pavia (IT)**
Inventor: **Schinelli, Daniele, Via Riviera 37/A, I-27100 Pavia (IT)**

(74) Representative: **Garrone, Fernando, Internazionale Brevetti s.r.l. Via Brentano 2, I-20121 Milano (IT)**

(54) An electronic interface device between a computer and external unit.

(57) An electronic device is disclosed for interfacing between a computer and an external unit such as another computer adapted for interfacing by asynchronous transmission on the V24-RS232 Standard with the local telex or teletype. The interface is specially designed for the so-called personal computers and is of a highly reduced size and moderate cost.

The interface, which is managed by the computer central processor whereto it is connected and has, therefore, no intelligent components, comprises a parallel-series, or vice versa, data conversion circuit, a multiplexer-demultiplexer adapted to route the data from the computer toward and external computer or telex line, first level conversion circuits from the computer standard to the telex line standard, and second level conversion circuits from the computer standard to the V24 Standard, as well as a supply unit adapted to generate the ±60V voltage, all these being accommodated as a set on a single board directly connectable to the computer central unit.

"AN ELECTRONIC INTERFACE DEVICE BETWEEN A COMPUTER AND EXTERNAL UNIT"

This invention relates to an electronic interface device for use between a computer and an external unit, in particular a telex line, a local teletype for telex printout and/or a further computer capable of interfacing by asynchronous transmission on the V 24-RS 232 Standard.

In information transmission systems, the problem is felt of overcoming the difficulties inherent to the different types of information being supplied or receivable, on the one side by the computer, and on the other side by a telex system. Such difficulties are mainly attributable to the different interfacing standards of the various units involved, since the computer issues and receives parallel and synchronous binary communications, whereas the telex line is arranged to provide and receive asynchronous serial data at 5 levels (Baudot System), and communication between the computers takes place in accordance with another V24 standard, also of the serial type. Further, the information rate of transmission is much higher in the computer, e.g. of 1200 Bauds, whilst the telex line operates at a rate of 50-75 Bauds. Such differences make impossible direct communication between the computer and telex line or local teletype which transmits and receives telex messages.

To obviate this problem, a prior patent by this Applicant (Patent Application 25829 A/81, filed on 23.12.81) proposed an interface device for telex which is placed externally to the computer and is input with with data or the instructions from the computer in the standard or format used by the latter for outside communication (V24 Standard) and outputting data converted to the standard or format of the telex line. Such an interface circuit comprises essentially level converting circuits, for converting from the computer standard to the level of the central unit, series-parallel conversion circuits, a central processing unit for processing the information supplied from the computer or central processor, parallel-series conversion circuits and circuits for converting from the level of the central unit to the standard of the telex line.

Such an interface device for telex has shown to be particularly satisfactory and reliable, and fully solved the problems of interfacing between computers of some size and the telex line. However, the prior interfacing device affords a performance level which is out of proportion with smaller computers, such as the so-called "personal computers", for which, in consideration of the lower cost of the system as a whole, a more adequate interface to their standards is desirable.

In the light of the above-outlined situation, it is the aim of this invention to provide an interfacing device between the computer and external unit which can, by virtue of its constructional features, fit the requirements of reduced size computers.

Within the above general aim, it is a particular object of this invention to provide an electronic device for interfacing between a computer and external unit, which is less expensive to manufacture on account of its constructional features and reduced structural complexity, while retaining the functional characteristics of prior interfaces.

Another object of the invention is to provide an electronic interfacing device between a computer and external unit which has greatly reduced space requirements and may be entirely included in a single board for insertion in the computer itself.

A further object of this invention is to provide an electronic interfacing device between a computer and external unit, which has special functions of control on the continuity and established connection to the line.

Still another object of this invention is to provide an electronic interfacing device between a computer and external unit, which can automatically maintain the electric characteristics required by the telex unit for maintaining the connection.

It is a not unimportant object of the invention to provide an electronic interfacing device between a computer and external unit, as indicated, which can make use of known components which are readily available commercially and thereby apt to lower the device costs of manufacture.

The above aim, and these and other objects such as will be apparent hereinafter, are achieved by an electronic interface device between a computer and an external unit, according to the invention, comprising parallel-series data conversion circuits and level conversion circuits from the computer standard to the standard of the external unit to be connected, and characterized in that it comprises, on a single board and operatively and function-wise interconnected, a multiplexer-demultiplexer device interposed to said parallel-series data conversion circuits and first level conversion circuits for converting from the computer standard directly to the standard of an external telex line and second level conversion circuits for converting from the level of the computer standard directly to the standard of asynchronous communication between different computers, as well as a supply unit operative to convert the voltage levels provided by the computer into the voltage levels required by the level conversion circuits.

In particular, the invention resides in replacing the board which provided interfacing between different computers by means of a V24 gate (line driver) with a board wherein, provided upstream of the level conversion circuits, is a multiplexer which controls the connection to the telex line or further external computer.

Specifically, reference will be made hereinafter to a personal computer by IBM which is equipped with the OPEN CHANNEL system whereby an external board prepared by the user may be inserted for direct connection and control by the central unit of the computer itself. However, this electronic interfacing

0157113

device may be applied, with some modifications, to any systems and computers which can afford direct connection to the computer central unit.

Further features and advantages will be more clearly understood from the following description of a preferred but not exclusive embodiment of an electronic interface device between a computer and external unit, according to the invention, with reference to the accompanying illustrative and not limitative drawings, where:

Figure 1 is a block diagram of the electronic device as a whole;

Figures 2, 2a-2b show the circuit diagrams of this electronic device;

Figure 3 shows the power supply circuit diagram; and

Figures 4, 4a-4b show a block diagram of the management routine for the interface of this invention.

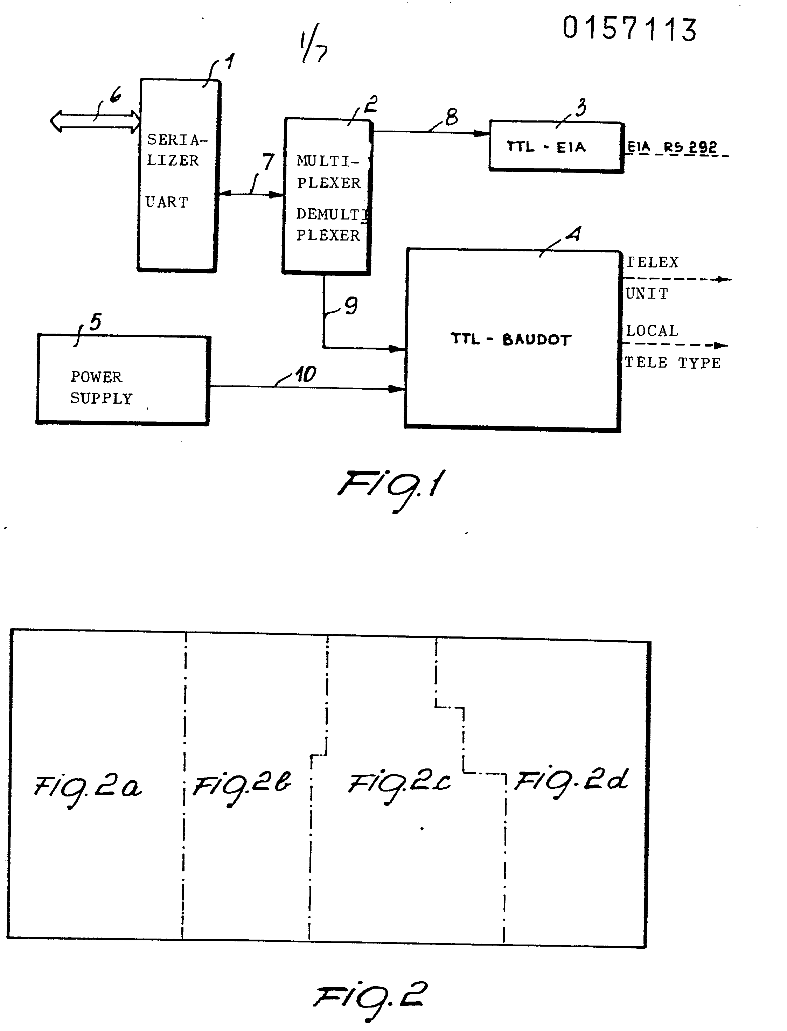

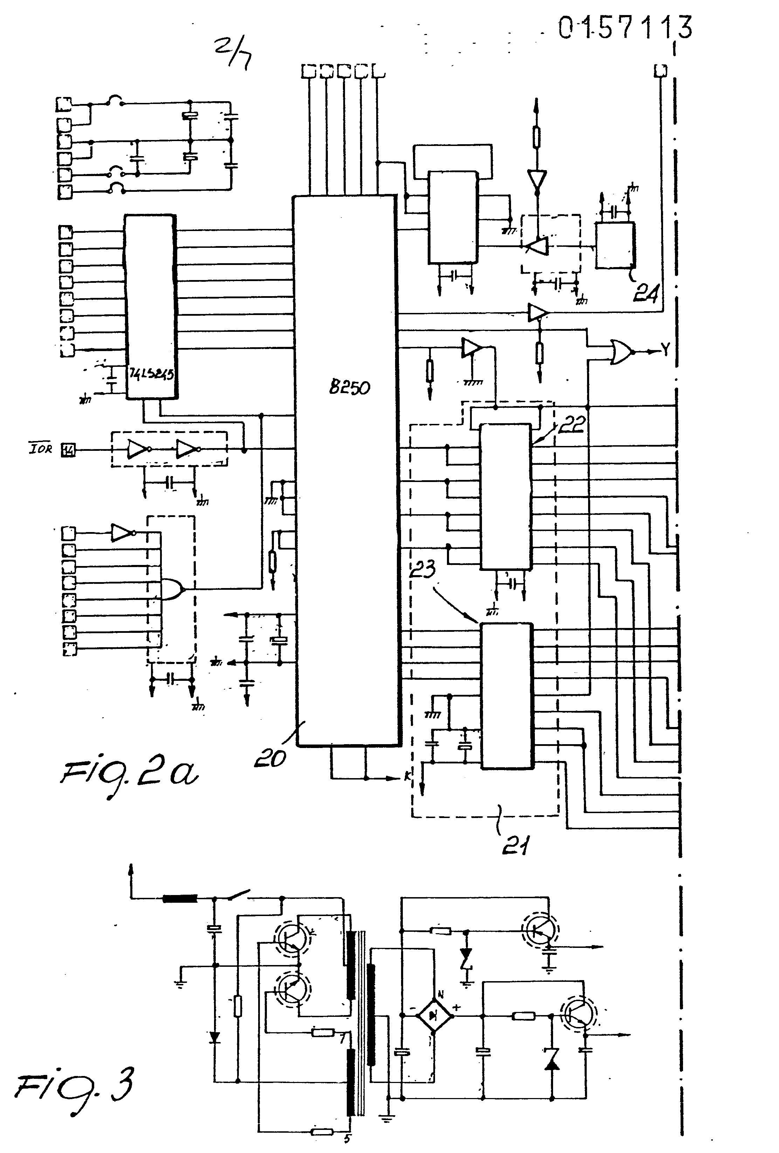

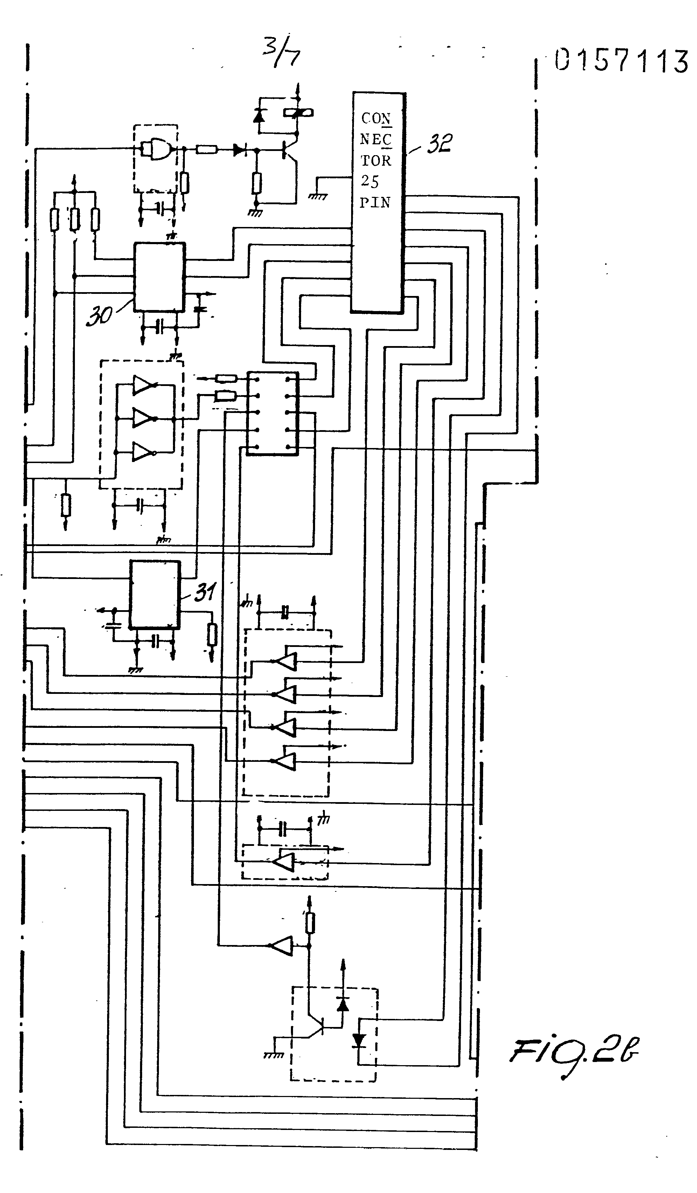

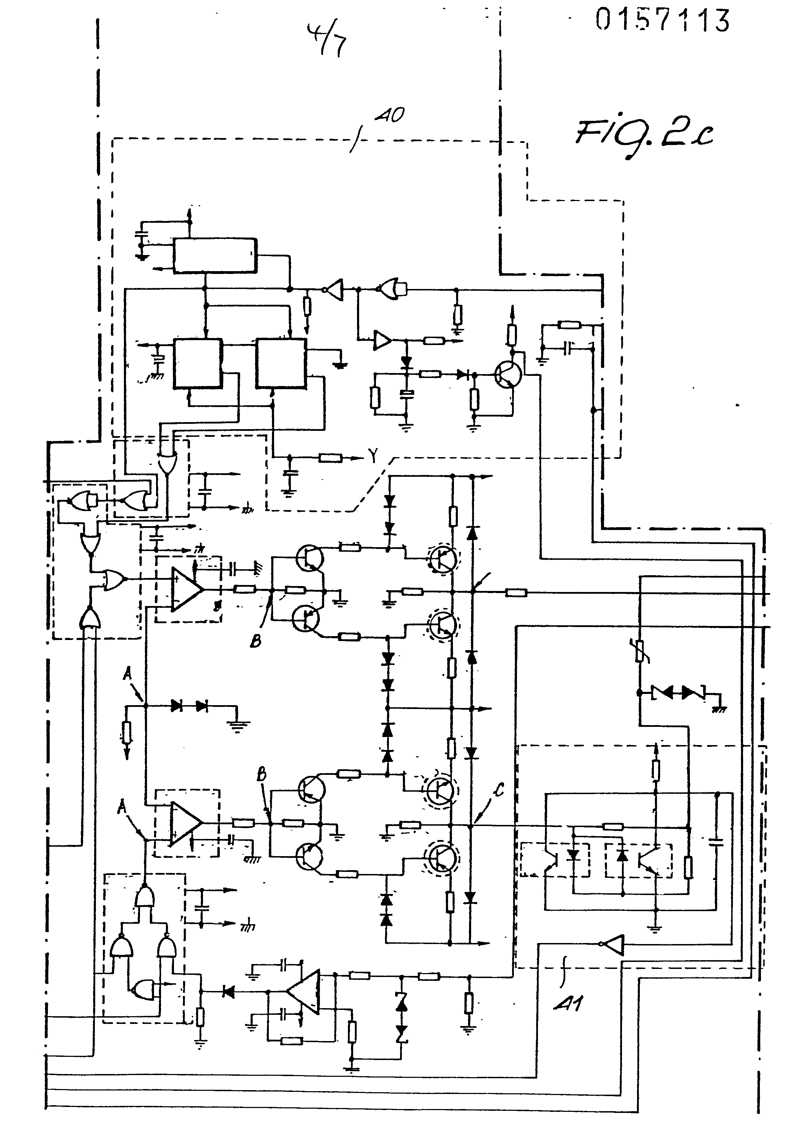

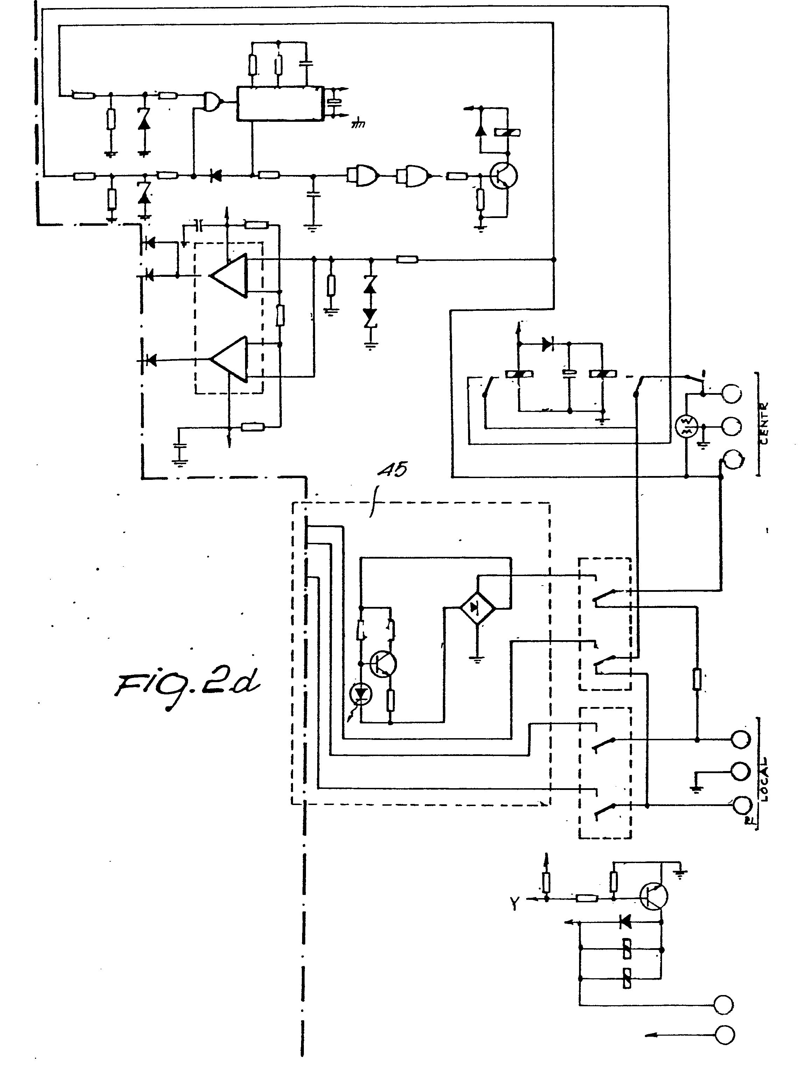

In Figure 1, there is shown the block diagram for the various functional elements which make up this interface device. More specifically, indicated at 1 is the serializer or parallel-series converter receiving at its input data from the computer (through a data bus 6) and being operative to convert these data from parallel to serial and output them to the line 7. This type of component is known commercially with the designation UART and is capable of effecting the conversion both in the direction (parallel to serial) indicated and in the opposite direction where it is the computer that receives data or information. Located downstream of the serializer 1 is a multiplexer-demultiplexer device capable of routing the oncoming data on the line 7 toward the line 8, and accordingly, to the level converter 3 or line 9, and hence to the level converter 4. In particular, the level converter 3 allows conversion from the level TTL, which belongs to the central unit of the computer, to the level EIA for the gate V24-RS232 intended for interfacing with other computers, whilst the level converter 4 effects the conversion from the level TTL to the BAUDOT level compatible with telegraph mail. Outlined in phantom lines on the drawing are the connections for asynchronous transmission in the V24 Standard, transmission to the telex unit and the local teletype. The circuit also provides a power supply unit 5 capable of generating the required voltage of $\pm$ 60 Volts for operation of the conversion circuit 4. In the drawing, the power supply unit 5 is shown connected to the conversion unit 4 through the line 10. That power supply unit forms a unique feature of this interfacing device, it being formed on the same board as the other circuits and by deriving the input voltage directly from the central unit of the computer and requiring no external connections, such as to the mains voltage.

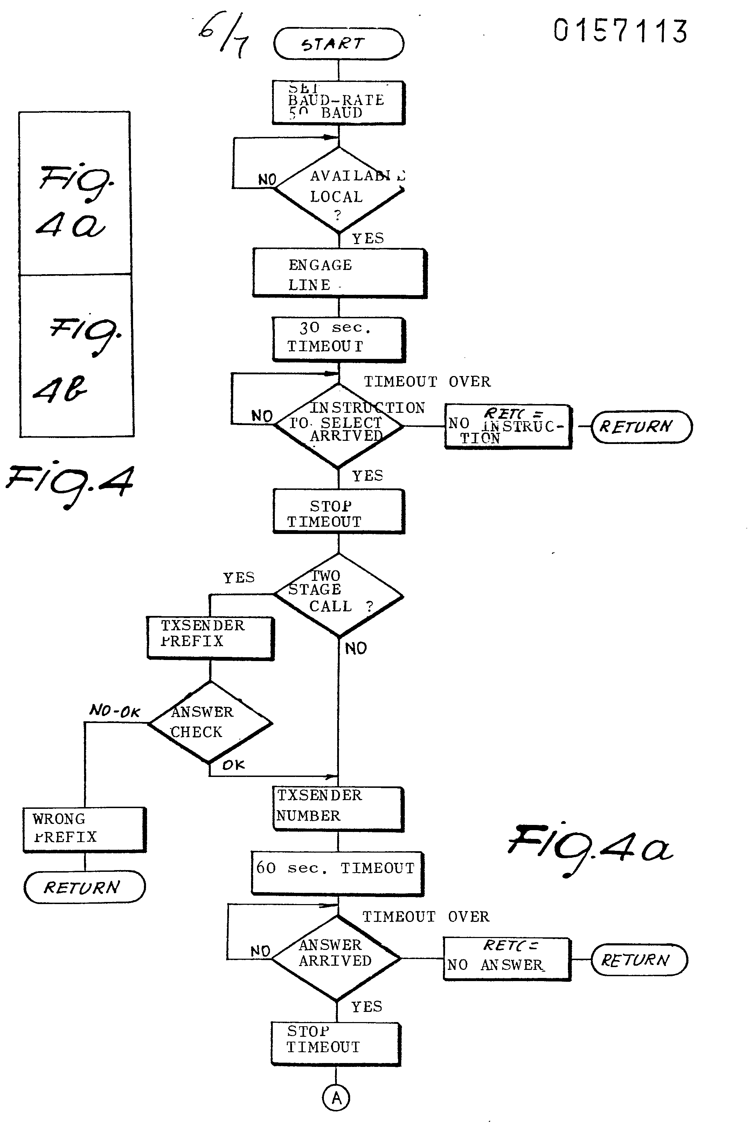

Figure 2 illustrates the wiring diagram for Figures 2a to 2d showing the complete circuit of the interfacing device. Particularly in Figure 2a, that portion of the circuit which relates to the serializer and the multiplexer-demultiplexer is shown. In particular, the component 20 (consisting, for example, of the integrated 8250) forms the serializer input with data from the computer in the parallel format and outputting the serialized data at the desired transmission rate. In particular said component 20 will receive information as to whether to generate a transmission rate equal to the rate used on the telegraph line and of 50 BAUDS (where transmission on the line or communication with the local teletype is sought) or maintain the same rate of 1200 BAUDS for interfacing with another computer. Said serializer 20 utilizes a single quartz oscillator 24 at a frequency of 18.432 MHz for generating the 50 BAUDS rate.

Indicated at 21 is the multiplexer-demultiplexer circuit comprising essentially two integrated, e.g. the integrated circuit 74 LS 241, designated with the reference numeral 22, and the integrated circuit 75157 designated with the reference numeral 23. Such I.C.'s, as enabled through the lines issuing from the pins 30,31 and 34 of the serializer 20, act the one for routing the data from the computer and as serialized by the component 20 either to the gate EIA or to the telex line, and the other for multiplexing the data and/or information from the two output units to the component 20, which operates here in the reverse mode, i.e. to output parallel data to the computer central unit.

The diagram of Figure 2b shows that portion of the circuit which relates to the level conversion for the gate EIA. Shown in the figure are, in particular, the I.C.'s 30 and 31 (formed by 75150) which act for converting from the level TTL which belongs to the computer central unit to the required level for asynchronous communication in the V 24-RS 232 Standard. Indicated at 32 is the connector and at 25 a pin allowing connection to the communication cables to further external computers.

Shown in Figure 2c are the circuits relating to the level converter for the telegraph line, the circuit sensing line continuity (within the dash-line block and indicated at 41), and to the receiving circuit 40. The level conversion circuit is substantially similar to that disclosed in the cited prior patent to this Applicant, and in particular, the fact should be underlined that at the points designated with the character A the TTL level of 5 Volts is still present, at the points designated with the character V the level is already $\pm$ 12 Volts, and at the points designated with the character C the data have already been converted to the line voltage of $\pm$ 60 Volts. As for the circuit sensing continuity of the line 41, it should be noted that this comprises essentially two pairs 42 and 43 each formed by a light emitting diode having a light sensitive element associated therewith. The light emitting diodes are connected directly to the output of the interfacing device on the telex side, and in the instance of the line being properly connected allow the phototransistors

0157113

to issue a signal corresponding to that state. Consequently, the computer is enabled to assess the line continuity.

Figure 2d shows the final circuits of the telex gate for connection to the telex unit and/or the local teletype. That figure also shows the wiring diagram for the automatic current regulator 45 capable of maintaining the standards required by the unit to hold the connection to the computer. That circuit essentially comprises a diode bridge, rectifier, and a diode which only utilized here for resistance purposes.

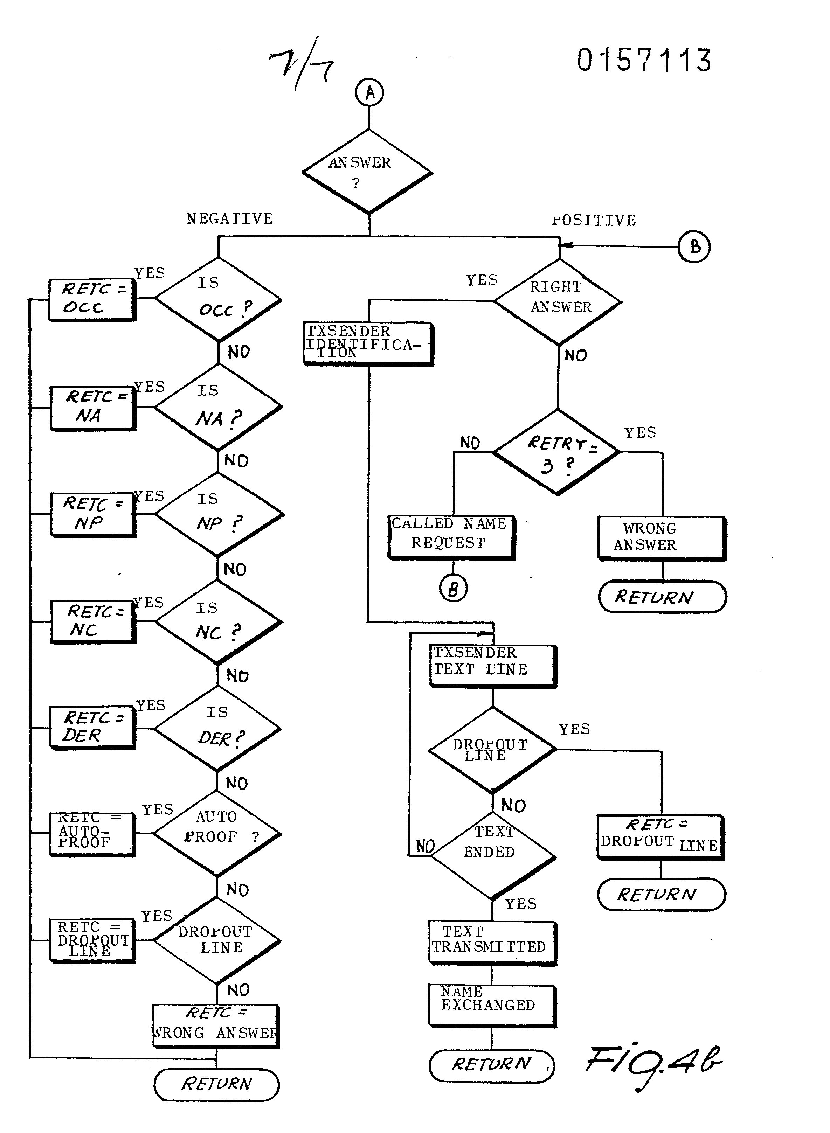

Shown in Figure 3 is the power supply circuit which allows generation of the $\pm$ 60 Volts voltage required for conversion of the diagram 2d from the 12 Volts voltage picked up from the computer central unit. That power supply, which comprises essentially a transformer for transforming the voltage, is a unique component of this device and is highly advantageous in that it eliminates the need for connection to an external power supply, such as the mains voltage, and can be formed on the same board as the other circuit parts, thereby reducing the system space requirements. In fact, all of the circuits which make up the device are formed on a single board which is inserted through a specially provided slot or seat in the computer so as to establish direct connection to the central unit thereof. As a result, that device absolutely requires no auxiliary space and can be inserted in lieu of the usual boards of the gates V24 - RS 232.

Figures 4, 4a and 4b show a block diagram of the interface management program as implemented by the computer central unit, which removes, therefore, the need for intelligent I.C.'s within the interfacing device proper. In particular Figure 4 shows the connection between the two diagrams of Figures 4a and 4b into which the program has been subdivided for space reasons. That program is self-explanatory, and only the following points need be raised:

In order to be operative, the program requires the following information items: prefix (this is supplied, if any, in the course of two-stage calls); number (forming the number to be dialled); ANSWERBACK (provides the answer of the called number), discriminator between transmission and perforation (the program also allows for perforation, and it is apparent how in that case how the line checks and analysis of the unit answer are avoided). The single program output consists of the RETC variable which informs the main program of the state of the occurred transmission according to its values.

As may be gathered from the above description, the invention fully achieves its objects. In fact, an interface has been provided which can operate between the computer and external units, such as another computer, the telex line or the local printer of much held-down costs (the related circuits are fairly simple and the number of the components used is definitely smaller than that of the known interface for larger size computers), and of definitely reduced bulk. In fact, all the circuits are accommodated on a single board adapted to be inserted through the slot provided for OPEN CHANNEL computers, thereby the computer as a whole has precisely the same volume as if it included no such board. Furthermore, that board allows for selective interfacing with the telex unit or another external computer, it requiring no replacement of the board according to the external user (computer or the telex line) with which connection is sought, but that discrimination is performed automatically by the internal circuits of the board based upon the commands from the central unit. It should be further noted that the connection to the computer central unit also imparts the telex system with capabilities and characteristics which are typical of an intelligent system, such as the faculty of sending telex at preset times of the day, even overnight, of managing the interfaces and possibly interrupt the transmission upon sensing a request for connection from the outside and the like. The system, moreover, is quite reliable thanks also to the presence of the output circuit of automatic current regulation and circuit monitoring the line continuity. Also to be underlined is the fact that the components used, as individually considered, are known and commercially available without difficulty, while their combination in a single board for the purposes and functions mentioned hereinabove constitutes instead a novelty and an advance of considerable import in the specific art.

The invention as disclosed is susceptible to

0157113

many modifications and changes without deviating from the purview of the inventive concept.

The materials used, individual components, shape and dimensions of the board may vary contingent on requirements.

## CLAIMS

1. An electronic interface device between a computer and an external unit, comprising parallel-series data conversion circuits and level conversion circuits from the computer standard to the standard of the external unit to be connected, characterized in that it comprises, on a single board and operatively interconnected, a multiplexer-demultiplexer device interposed to said parallel-series data conversion circuits and first level conversion circuits for converting from the computer standard directly to the standard of an external telex line and second level conversion circuits for converting from the level of the computer standard directly to the standard of asynchronous communication between different computers, as well as a supply unit operative to convert the voltage levels provided by the computer into the voltage levels required by the level conversion circuits.

2. An electronic device according to Claim 1, characterized in that said first conversion circuits allow level conversion from the TTL level to the BAUDOT Standard and said second conversion circuits allow level conversion from the TTL level to the EIA Standard.

3. An electronic device according to one or more of the preceding claims, characterized in that said board is connected directly to the computer central unit and receives instructions for managing the interface directly therefrom.

4. An electronic device according to one or more of the preceding claims, characterized in that said power supply unit is connected with its input solely to the computer central unit and receives the present supplies therefrom and comprises transformers adapted for transforming said supplies into the supplies required by said level conversion circuits.

5. An electronic device according to one or more of the preceding claims, characterized in that said first level conversion circuits for a telex line and/or local teletype comprise a current automatic regulating unit.

6. An electronic device according to one or more of the preceding claims, characterized in that said first level conversion circuits comprise a circuit sensing the line continuity and including light emitting elements and light sensitive elements coupled together.

Fig.1

Fig.2

2/7

0157113

B250

74LS245

$\overline{IOR}$  14

Y

24

22

23

20

K

21

Fig. 2a

Fig. 3

0157113

CON
NEC
TOR
25
PIN

32

30

31

Fig.2b

FIG.2c

4/7

0157113

0157113

Fig.2d

45

CENTR

LOCAL

Y

0157113

START

SET
BAUD-RATE
50 BAUD

AVAILABLE
LOCAL
?  — NO

YES

ENGAGE
LINE

30 sec.
TIMEOUT

TIMEOUT OVER

INSTRUCTION
TO SELECT
ARRIVED  — NO

RETC =
NO INSTRUC-
TION  — RETURN

YES

STOP
TIMEOUT

TWO
STAGE
CALL ?

YES

TXSENDER
PREFIX

NO

ANSWER
CHECK

NO-OK

OK

TXSENDER
NUMBER

WRONG
PREFIX

RETURN

60 sec. TIMEOUT

TIMEOUT OVER

ANSWER
ARRIVED  — NO

RETC =
NO ANSWER  — RETURN

YES

STOP
TIMEOUT

Ⓐ

Fig.
4a

Fig.
4b

Fig.4

Fig.4a

A

ANSWER ?

NEGATIVE                                    POSITIVE

B

YES — RETC = OCC — IS OCC ?

YES — RIGHT ANSWER

TXSENDER IDENTIFICA-TION

NO

NO

RETC = NA — YES — IS NA ?

NO

RETC = NP — YES — IS NP ?

RETRY = 3 ?

NO — YES

NO

RETC = NC — YES — IS NC ?

CALLED NAME REQUEST

WRONG ANSWER

RETURN

NO

B

RETC = DER — YES — IS DER ?

TXSENDER TEXT LINE

NO

DROPOUT LINE — YES

RETC = AUTO-PROOF — YES — AUTO PROOF ?

NO

NO — TEXT ENDED

RETC = DROPOUT LINE

NO

RETC = DROPOUT LINE — YES — DROPOUT LINE

RETURN

NO

YES

RETC = WRONG ANSWER

TEXT TRANSMITTED

NAME EXCHANGED

RETURN

RETURN

Fig.4b